# EUROPEAN PATENT SPECIFICATION

(11) **EP 1 660 361 B1**
(45) Date of publication and mention of the grant of the patent: **01.10.2008**
(21) Application number: 04744185.2
(22) Date of filing: 06.08.2004
(51) Int. Cl.: B60T 7/20, F16D 65/14, F16D 63/00

(54) **DISC BRAKE**
SCHEIBENBREMSE
FREIN A DISQUE

(30) Priority: 06.08.2003 ZA 200306047; 06.08.2003 ZA 200302261
(43) Date of publication of application: 31.05.2006
(73) Proprietor: Van der Lingen, Theophilus W., 0181 Pretoria (ZA)
(72) Inventor: Van der Lingen, Theophilus W., 0181 Pretoria (ZA)
(74) Representative: Harrison Goddard Foote
(86) International application number: PCT/IB2004/002539
(87) International publication number: WO 2005/014349

(56) References cited:
- WO-A-87/02108
- DE-A- 3 325 776
- DE-U- 9 217 449

## Description

This invention relates to a disc brake.

In towed vehicles such as caravans, trailers and the like, which are connected to a draught vehicle by means of a tow bar, use is often made of a so-called run-on coupling to activate the brakes of the towed vehicle.

The run-on coupling is typically configured such that when a compressive load, in excess of a predetermined minimum compressive load, is applied to the tow bar, e.g. as would result when the draught vehicle is being braked, the towed vehicle's brakes are applied. When the draught vehicle is reversing, a compressive load is applied to the tow bar. Under these circumstances it is desirable that the brakes of the towed vehicle not be applied.

Hitherto, towed vehicles of this type made use of drum brakes capable of inhibiting braking in reverse.

Document WO 87/02108 discloses a disk brake for a trailer according to the preamble of claim 1.

According to one aspect of the invention there is provided a disc brake according to claim 1.

Braking of the brake disc may be inhibited by inhibiting operation of the actuation means.

The invention may be particularly suitable for use on a towed vehicle, the actuation means then typically including a run-on coupling.

The brake may be biased towards its first operative condition. The brake may be displaced towards its second operative condition when the brake disc is moving in a predetermined direction, typically when the vehicle is moving in a backward direction. Hence, when the vehicle is a towed vehicle which is towed in its forward direction or is stationary, the brake will be displaced towards its first operative condition and will operate in the normal fashion. However, when the vehicle is reversed, the brake will be displaced, against the bias, to its second operative condition thereby inhibiting braking action.

In one embodiment of the invention the disc brake may include a bracket to which the calliper is mounted, at least part of the calliper being displaceable relative to the bracket generally in the circumferential direction of the brake disc between a first position corresponding to the first operative condition of the brake and a displaced position corresponding to the second operative condition of the brake, and bias means acting between the calliper and the bracket to bias the calliper towards its first position. The bracket will typically be connected to a component such as a wheel spindle, relative to which the brake disc is rotatable.

The calliper may have an inner leg and an outer leg, one of the brake pads being fixed to the inner leg and being displaceable relative to the outer leg of the calliper in a direction transverse to the brake disc, the other pad being fixed to the outer leg of the calliper which is displaceable relative to the bracket transversely to the brake disc.

The actuation means may include a link arrangement which is connected or connectable to an actuator, the link arrangement including a lever arm pivotally connected to the bracket, a first link pivotally connected at its ends respectively to the lever arm and to said one brake pad, and a second link which is pivotally connected at its ends respectively to the lever arm and to the outer leg of the calliper, the ends of the first and second links connected to the lever arm being connected on opposite sides of the pivotal connection of the lever arm to the bracket. The connection of the lever arm to the bracket may be such as to permit limited linear movement relative to the bracket transverse to the disc, for the purpose of allowing the brake pads to centre on the disc.

In the first position of the calliper, the first link may extend at an angle relative to the brake disc which is more nearly normal to the brake disc than the angle at which the second link extends relative to the brake disc. In the displaced position of the calliper the second link may extend at an angle relative to the brake disc which is more nearly normal to the brake disc than the angle at which the first link extends relative to the brake disc.

The brake includes bias means whereby the or each of the brake pads are urged towards their first position.

Low or no friction resistance is provided in the circumferential direction between the displaceable brake pad or pads and the calliper.

The calliper may have a first leg and a second leg, the link arrangement being connectable to an actuator, the link arrangement including a lever arm which is pivotally connected to the first leg of the calliper and a link which is pivotally connected to the lever arm at a position spaced from the connection of the lever arm to the first leg of the calliper, and to the second leg of the calliper.

When the brake pads are in their first position, the link may extend at an angle relative to the brake disc which is closer to normal to the brake disc than the angle at which it extends when the brake pads are in their second or displaced position.

The disc brake may include a stop arrangement for inhibiting the operation of the actuation means when the brake is in its second operative condition thereby inhibiting actuation of the brake.

The stop arrangement may include a ratchet mechanism.

The invention will now be described, by way of example, with reference to the accompanying diagrammatic drawings.

In the drawings:
Figure 1 shows a schematic plan view of a disc brake in accordance with the invention in a first operative condition;
Figure 2 shows the disc brake of Figure 1 in a second operative condition;
Figure 3 shows a schematic plan view of a second embodiment of a disc brake in accordance with the invention in a first operative condition; and
Figure 4 shows the disc brake of Figure 3 in its second operative condition.

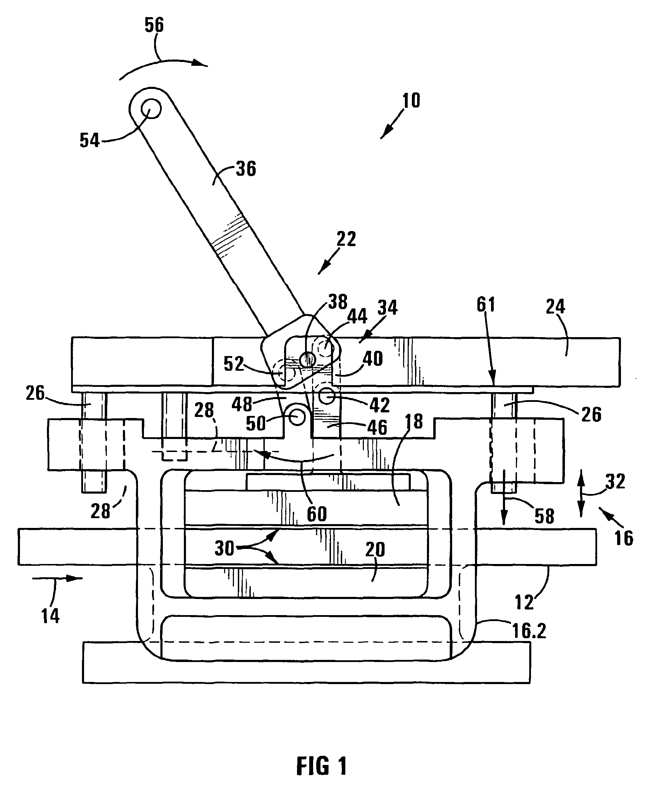

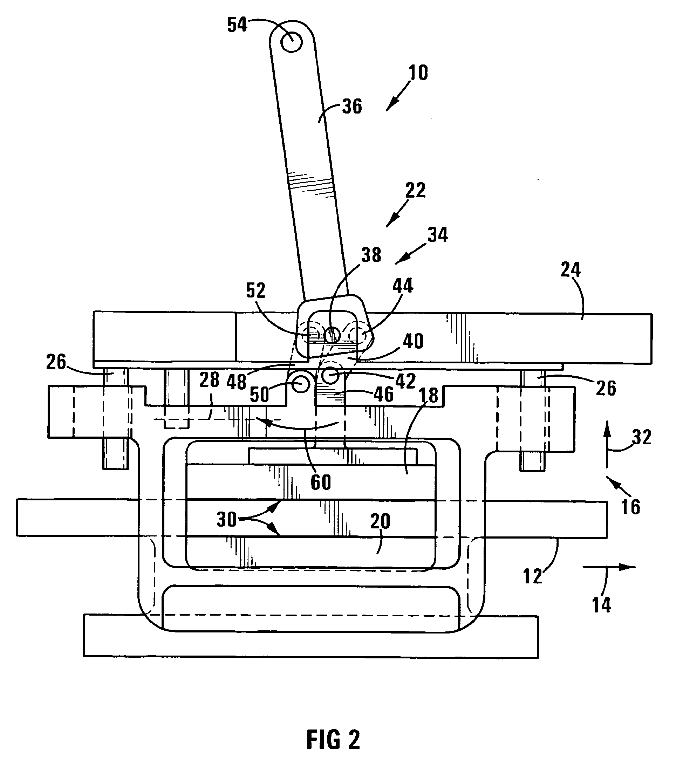

Reference is now made to Figures 1 and 2 of the drawings, in which reference numeral 10 refers generally to a disc brake in accordance with the invention.

The disc brake 10 includes a brake disc 12 which is connected, in a conventional fashion, to a vehicle wheel for rotation therewith. The wheel is connected to a body of a vehicle (not shown) by means of a conventional suspension arrangement (not shown). When the vehicle moves in a forward direction, the wheel and hence near the rim of the brake disc 12, as viewed in the drawings, rotates in the direction of arrow 14. Naturally, when the vehicle reverses, the wheel and the brake disc will move in the direction opposite to the direction of arrow 14.

The brake 10 includes a calliper 16 which straddles the brake disc 12, a pair of pads 18, 20 and actuation means, part of which is generally indicated by reference numeral 22. The caliper 16 has an inside leg and an outside leg 16.2. The inside leg is used in compression and the outside leg 16.2 is used in tension.

The calliper 16 is connected to a bracket 24 which in turn is suitably connected to a support, e.g. a suspension component or wheel spindle of the vehicle such that the disc 12 is rotatable relative to the bracket 24. The calliper 16 is connected to the bracket 24 by means of a pair of connecting elements or pins 26. The pins 26 act as slides to permit the pads to centre. Further, the pins 26 extend through slots in the calliper 16 to permit displacement of the calliper between a first position (shown in Figure 1 of the drawings), corresponding to the first operative condition of the brake, and a displaced position (shown in Figure 2 of the drawings) corresponding to the second operative condition of the brake 10. The calliper 16 is urged towards its first position by means of a compression spring 28 acting between the calliper 16 and one of the pins 26 or the bracket 24. If desired, the pins 26 can extend through both the inside and outside legs of the caliper 16.

The pads 18, 20 define oppositely disposed transversely spaced friction surfaces 30 for contacting opposed sides of the brake disc 12. The pad 18 is typically positioned to contact an operatively inner surface of the brake disc 12 and the pad 20 is positioned to contact an operatively outer surface of the brake disc 12.

The pad 20 is fixed to the outside leg 16.2 of the calliper 16. In contrast, the pad 18 is fixed to the inside leg of the calliper which is slidably displaceable relative to the outside leg 16.2 of the calliper 16 transversely relative to the brake disc 12 in the direction of arrow 32. Similarly, the outside leg 16.2 of the calliper 16 is displaceable on the pins 26 transversely relative to the brake disc 12 in the direction of arrow 32.

The actuation means 22 includes a link arrangement, generally indicated by reference numeral 34. The link arrangement 34 includes a lever arm 36 an end of which is pivotally connected via a pivot pin 38 to a slide 61. The slide 61 has transverse movement relative to the bracket 24 to allow the lever to accommodate proper centering of the brake pads 18, 20. The link arrangement 34 further includes a first elongate link 40 having a pair of ends which are pivotally connected via pins 42 and 44 respectively to an apertured lug 46 fast with the brake pad 18 and the lever arm 36. A second elongate link 48 has a pair of ends which are pivotally connected via pins 50, 52, respectively to the outside leg 16.2 of the calliper 16 and the lever arm 36.

The free end 54 of the lever arm 36, i.e. the end remote from the pin 38 is connected or connectable to an actuator. In this regard, the actuator may be a run-on coupling which can be connected to the free end 54 of the lever arm mechanically, hydraulically, pneumatically or in any other suitable fashion. Naturally, however, any other kind of actuator could be connected to the lever arm 36. Further, the long travel of the lever arm 36, being in the circumferential direction, enables it to compensate for brake pad wear.

When the lever arm 36 is in the position shown in Figure 1 of the drawings, the brake pads 18, 20 are in their released positions in which the brake disc 12 can pass freely therebetween. In this position, it will be noted that the first link 40 extends generally perpendicular to the brake disc 12. Further, the second link 48 extends at an acute angle relative to the brake disc 12. Further, the pins 44, 52 are positioned on opposite sides of the pin 38 and the pin 44 is positioned further from the brake disc 12 than the pin 38 and the pin 52 is positioned closer to the brake disc 12 than the pin 38.

When the vehicle of which the disc brake 10 forms part is moving in a forward direction which causes the disc to move between the pads 18, 20 in the direction of arrow 14, the calliper is in the position shown in Figure 1 of the drawings. When the brake is to be actuated, the lever arm 36 is displaced in the direction of arrow 56 causing the lever arm 36 to pivot about the pin 38. In view of the spacing between the pin 44 and the pin 38, the brake pad 18 is displaced in the direction of arrow 58 into contact with the surface of the brake disc 12. This simultaneously results in the displacement of the outside leg 16.2 of the calliper 16 in the direction opposite to the direction of arrow 58 thereby bringing the brake pad 20 into contact with the outer surface of the brake disc 12 such that the disc 12 is braked between the pads 18, 20. When the brake is released, the lever arm 36 is displaced in a direction opposite to the direction of arrow 56 thereby returning the calliper and the pads to the position shown in Figure 1 of the drawings.

If, however, the vehicle of which the disc brake 10 forms part is displaced in a reverse direction, the brake disc 12 moves between the pads 18, 20 in a direction opposite to the direction of arrow 14. As a result of frictional forces between the brake disc 12 and the pads 18, 20, when the brake is applied the calliper 16 is displaced in a direction opposite to the direction of arrow 14 into the position shown in Figure 2 of the drawings.

It is to be noted that, in this position, the links 40, 48 have been pivotally displaced in the direction of arrow 60 relative to their pivotal connections via the pins 44, 52 with the lever arm 36. This results in the outside leg 16.2 of the calliper being displaced in the direction of arrow 58. Further, the brake pad 18 is displaced in a direction opposite to the direction of arrow 58. In other words, the spacing between the brake pads 18, 20 and hence the lever travel required in order to actuate the disc brake 10 has increased substantially. This in essence prevents operation of the disc brake 10 when the vehicle is reversing. If not already inherent in the braking linkage and if desired a stop can be provided mechanically to prevent displacement of the lever arm beyond a point which would result in actuation of the brake when in its second operative condition. This stop may be overridden by a handbrake or parking brake.

When the vehicle moves in a forward direction, i.e. the brake disc 12 moves in the direction of arrow 14, the calliper is returned to its first position (shown in Figure 1 of the drawings) at first under the action of the spring 28 and after contact is made between the pads 18, 20 and the disc 12 by the friction of the pads 18, 20 on the brake disc 12, thereby permitting operation of the disc brake in the manner described above. As mentioned above, the spring 28 serves to displace the caliper towards its first position. The links 40, 48 are then close enough to normal relative to the disc 12, in comparison with the friction angle, to allow friction forces to pull in the brake against actuating forces on the lever. This is requisite on a towed vehicle when starting downhill after reversing.

It will be appreciated, from the above, that displacement of the calliper between its first position and its displaced position is achieved, at least partially, by frictional forces between the brake disc 12 and one or both of the pads 18, 20. Accordingly, to ensure that at least one of the brake pads is lightly in contact with the brake disc in order to sense the direction of movement of the brake disc, a spring may be provided to urge the pad towards the disc.

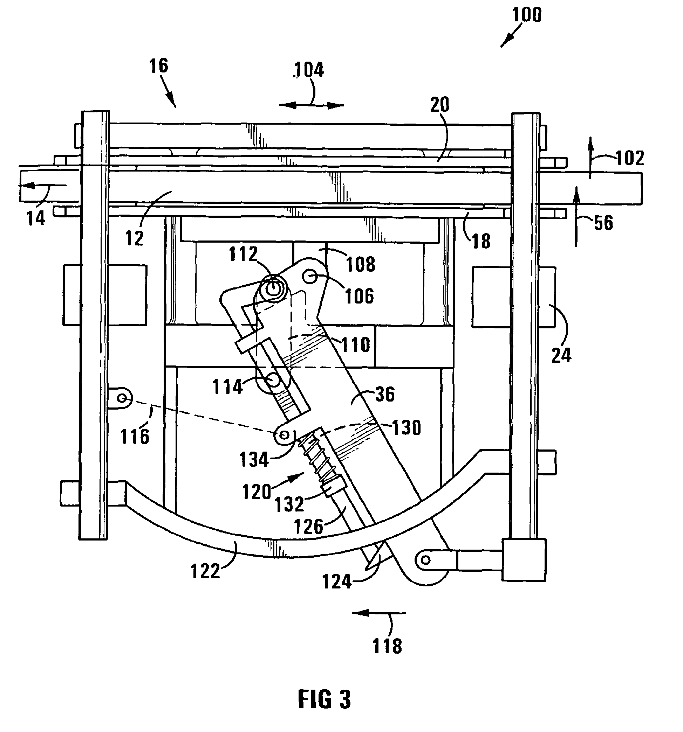

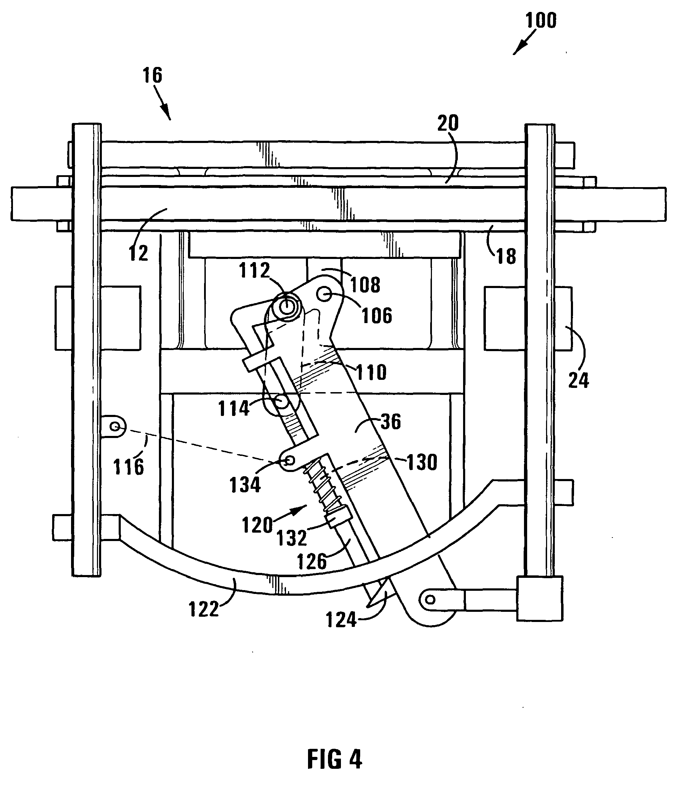

Reference is now made to Figures 3 and 4 of the drawings, in which reference numeral 100 refers generally to a disc brake in accordance with a second embodiment of the invention and, unless otherwise indicated, the same reference numerals used above are used to designate similar parts.

In this embodiment of the invention, the calliper 16 has a first or inner leg and a second or outer leg. The brake pad 18 is displaceable relative to the outside leg of the calliper 16 and hence also the brake disc 12 in the direction of arrow 102. The first leg of the calliper with the brake pad 18 and the brake pad 20 are displaceable relative to the calliper 16 in the direction of arrow 104 between a first position (shown in Figure 3 of the drawings), corresponding to the first operative condition of the brake and a displaced position (shown in Figure 4 of the drawings) corresponding to the second operative condition of the brake.

In this embodiment of the invention, the lever arm 36 is pivotally connected via a pin 106 directly to the apertured lug 108 fast with the brake pad 18. An elongate link 110 is connected respectively at its ends via pins 112, 114 to the lever arm 36 and the outside leg of the calliper 16.

A tension spring 116 extends between the lever arm 36 and the bracket 24 to retract the lever arm in the direction of arrow 118.

In use, when the vehicle of which the disc brake 100 forms part is being displaced such that the brake disc 12 moves between the pads 18, 20 in a forward direction, i.e. in the direction of arrow 14 and it is desired to brake the vehicle, the lever arm is displaced in a direction opposite to the direction of arrow 118. The lever arm pivots about the pin 112 thereby displacing the brake pad 18 in the direction of arrow 56 and the outside leg of the calliper in the opposite direction thereby to bring the pads 18, 20 into frictional contact with the surfaces of the brake disc 12. When the lever arm 36 is released, it returns under the bias of the spring 116 in the direction of arrow 118 to the position shown in Figure 3 of the drawings, thereby releasing the brake.

If, however, the vehicle is displaced in a reverse direction so that the brake disc moves between the pads 18, 20 in a direction opposite to the direction of arrow 14, by virtue of frictional forces, the brake pads 18, 20 are displaced in a direction opposite to the direction of arrow 14 into their second positions (shown in Figure 4 of the drawings). In this regard, the outer surface of the brake pad 20 and/or opposed surface of the calliper16 may be coated with a friction reducing coating to permit displacement of the brake pad 20 relative to the outside leg of the calliper 16 between its first and second positions.

It will be noted that, in the second positions of the brake pads 18, 20, the lever link 110 has pivoted about the pin 114 resulting in the displacement of the pin 106 and hence also the brake pad 18 away from the brake disc 12. This results in greater travel of the lever arm being required in order to actuate the brake. In order to limit the travel to less than that now required and thus inhibit operation of the disc brake 100 when the brake disc is moving in a direction opposite to the direction of arrow 14, a stop arrangement, generally indicated by reference numeral120 is provided. In this embodiment of the invention, the stop arrangement 120 comprises an arcuate member 122 having a radially outer surface on which a plurality of spaced apart teeth (not shown) is provided. The stop arrangement 120 further includes a complementary tooth engaging element 124 mounted on one end of an arm 126, the other end of which carries a follower running on a cam attached to the outside leg of the calliper so that the tooth engaging element 124 is brought into engagement with the teeth on the radially outer surface of the member 122 thereby inhibiting further displacement of the lever arm as the pad 18 moves forward. A spring 130 is mounted in compression between a collar 132 provided on the arm 126 and a stop 134 protruding from the lever arm 36. The spring, which is in compression, urges the tooth engaging element 124 away from the member 122 such that, in order to bring the tooth engaging element 124 into engagement with the teeth on the member 122, it is necessary to further compress the spring 130. Hence, the teeth on the member 122 and the tooth engaging element 124 function in the manner of a ratchet to inhibit displacement of the lever arm.

When the vehicle then moves in a forward direction and the brake disc 12 moves in the direction of arrow 14, with the tooth engaging element 124 stationary, spring 116 serves to return the brake pads in the direction of their first operative condition until they contact the brake disc. The angle of link 110 is then sufficiently close to normal in comparison with the friction angle of the pads to pull in the brake pads to their first positions (shown in Figure 3 of the drawings). In this position, the tooth engaging element 124 is displaced radially outwardly under the influence of the spring 130 permitting operation of the lever arm and hence the brake in the manner described above.

It will be appreciated that in both embodiments described above the brake may be activated by a run-on coupling. In addition, the brake may be actuated manually in a conventional fashion to function as a parking brake. If necessary the handbrake or parking brake may override the stop.

A disc brake in accordance with the invention may be particularly suitable for use on a towed vehicle such as a caravan or the like, particularly one which is connected to a draught vehicle by means of a run-on coupling. However, it is to be appreciated, that the disc brake in accordance with the invention may also be suitable for use in other applications.

## Claims

1. A disc brake including:
a calliper (16);
a pair of transversely spaced apart pads (18, 20) mounted to the calliper (16), the pads (18, 20) defining opposed inwardly directed friction surfaces for contacting opposed sides of a brake disc (12) which passes between the pads (18, 20); and
actuation means (22) for displacing the brake pads (18, 20) relative to the brake disc (12) between a released position in which the brake disc (12) can pass freely therebetween and an actuated position in which the pads (18, 20) are displaced into contact with the disc (12) to brake the disc (12), the brake having a first operative condition in which the actuation means can displace the pads (18, 20) into their actuated position to brake the brake disc (12) and a second operative condition in which braking of the brake disc (12) is inhibited **characterised in that**, both of the brake pads (18, 20) are displaceable in the circumferential direction of the brake disc (12) between a first position, corresponding to the first operative condition of the brake (10), and a displaced position corresponding to the second operative condition, the actuation means (22) including a link arrangement (34) configured such that when the brake pads are displaced circumferentially from the first position towards the displaced position the spacing between the brake pads (18, 20) is increased.

2. A disc brake as claimed in claim 1, in which the brake is biased towards its first operative condition, the brake being displaced towards its first operative condition when the brake disc (12) is stationary or moving in one direction and the brake being displaced, against the bias, towards its second operative condition when the brake disc (12) is moving in the opposite direction.

3. A disc brake as claimed in claim 1 or claim 2, which includes a bracket (24) to which the calliper (16) is mounted, at least part of the calliper (16) being displaceable relative to the bracket (24) generally in the circumferential direction of the brake disc (12) between a first position corresponding to the first operative condition of the brake and a displaced position corresponding to the second operative condition of the brake, and bias means (28) acting between the calliper (16) and the bracket (24) to bias the calliper (16) towards its first position.

4. A disc brake as claimed in claim 3, in which the calliper (16) has an inner leg and an outer leg (16,2), one of the brake pads (18) being fixed to the inner leg and being displaceable relative to the outer leg (16.2) of the calliper (16) in a direction transverse to the brake disc, the other pad (20) being fixed to the outer leg (16.2) of the calliper (16) which is displaceable relative to the bracket (24) transversely to the brake disc (12) and in which the link arrangement (34) is connectable to an actuator, the link arrangement (34) including a lever arm (36) pivotally connected to the bracket (24), a first link (40) pivotally connected at its ends respectively to the lever arm (36) and to said one brake pad (18), and a second link (48) which is pivotally connected at its ends respectively to the lever arm (36) and to the outer leg (16.2) of the calliper (16), the ends of the first and second links (40, 48) connected to the lever arm (36) being connected on opposite sides of the pivotal connection of the lever arm (36) to the bracket (24).

5. A disc brake as claimed in claim 4, in which, in the first position of the calliper (16), the first link (40) extends at an angle relative to the brake disc (12) which is more normal to the brake disc (12) than the angle at which the second link (48) extends relative to the brake disc (12) and in the displaced position of the calliper (16) the second link (48) extends at an angle relative to the brake disc (12) which is more normal to the brake disc (12) than the angle at which the first link (40) extends relative to the brake disc (12).

6. A disc brake as claimed in claim 1 or claim 2 which includes bias means (28) whereby the brake pads are urged towards their first position.

7. A disc brake as claimed in claim 6, in which the brake pads (18, 20) are displaceable circumferentially relative to the disc, the calliper having a first leg and a second leg, the link arrangement being connectable to an actuator, the link arrangement including a level arm (36) which is pivotally connected to the first leg of the calliper (16) and a link (110) which is pivotally connected to the lever arm (16) at a position spaced from the connection of the lever arm (36) to the first leg (108) of the calliper (16), and to the second leg of the calliper (16).

8. A disc brake as claimed in claim 7, in which, when the brake pads (18, 20) are in their first position, the link (110) extends at an angle relative to the brake disc (12) closer to normal than the angle at which it extends when the brake pads (18, 20) are in their second position.

9. A disc brake as claimed in any one of the preceding claims which includes a stop arrangement (120) for inhibiting the operation of the actuation means when the brake is in its second operative condition.

10. A disc brake as claimed in claim 9, in which the stop arrangement (120) includes a ratchet mechanism (122, 124).

## Patentansprüche

1. Scheibenbremse, umfassend
einen Sattel (16);
ein Paar von in Querrichtung beabstandeten Belägen (18, 20), die an dem Sattel (16) angebracht sind, wobei die Beläge (18, 20) gegenüberliegende, nach innen gerichtete Reibungsflächen zum Berühren von entgegengesetzten Seiten einer Bremsscheibe (12) definieren, die zwischen den Belägen (18, 20) durchgeht; und
Betätigungsmittel (22) zum Versetzen der Bremsbeläge (18, 20) relativ zu der Bremsscheibe (12) zwischen einer gelösten Position, in der die Bremsscheibe (12) frei zwischen diesen durchgehen kann, und einer betätigten Position, in der die Beläge (18, 20) zum Bremsen der Scheibe (12) in eine Berührung mit der Scheibe (12) versetzt sind, wobei die Bremse einen ersten Betriebszustand, in dem die Betätigungsmittel die Beläge (18, 20) in ihre betätigte Position zum Bremsen der Bremsscheibe (12) versetzen können, und einen zweiten Betriebszustand, in dem ein Bremsen der Bremsscheibe (12) gehemmt wird, hat, **dadurch gekennzeichnet, dass** beide Bremsbeläge (18, 20) in der Umfangsrichtung der Bremsscheibe (12) zwischen einer ersten Position, die dem ersten Betriebszustand der Bremse (10) entspricht, und einer versetzten Position, die dem zweiten Betriebszustand entspricht, versetzbar sind, wobei die Betätigungsmittel (22) eine Verbindungsanordnung (34) umfassen, die so eingerichtet ist, dass, wenn die Bremsbeläge umfangs von der ersten Position in Richtung der versetzten Position versetzt werden, der Abstand zwischen den Bremsbelägen (18, 20) vergrößert wird.

2. Scheibenbremse nach Anspruch 1, wobei die Bremse in Richtung ihres ersten Betriebszustands vorgespannt ist, wobei die Bremse in Richtung ihres ersten Betriebszustands versetzt wird, wenn die Bremsscheibe (12) ruht oder sich in einer Richtung bewegt, und wobei die Bremse gegen die Vorspannung in Richtung ihres zweiten Betriebszustands versetzt wird, wenn sich die Bremsscheibe (12) in der entgegengesetzten Richtung bewegt.

3. Scheibenbremse nach Anspruch 1 oder 2, umfassend einen Träger (24), an dem der Sattel (16) angebracht ist, wobei wenigstens ein Teil des Sattels (16) relativ zu dem Träger (24) im Allgemeinen in der Umfangsrichtung der Bremsscheibe (12) zwischen einer ersten Position, die dem ersten Betriebszustand der Bremse entspricht, und einer versetzten Position, die dem zweiten Betriebszustand der Bremse entspricht, versetzbar ist, und Vorspannmittel (28), die zwischen dem Sattel (16) und dem Träger (24) wirken, um den Sattel (16) in Richtung seiner ersten Position vorzuspannen.

4. Scheibenbremse nach Anspruch 3, wobei der Sattel (16) einen inneren Schenkel und einen äußeren Schenkel (16.2) aufweist, wobei einer der Bremsbeläge (18) an dem inneren Schenkel befestigt ist und relativ zu dem äußeren Schenkel (16.2) des Sattels (16) in einer Richtung quer zu der Bremsscheibe versetzbar ist, und wobei der andere Belag (20) an dem äußeren Schenkel (16.2) des Sattels (16) befestigt ist, welcher relativ zu dem Träger (24) quer zu der Bremsscheibe (12) versetzbar ist, und wobei die Verbindungsanordnung (34) mit einer Betätigungseinrichtung koppelbar ist, wobei die Verbindungsanordnung (34) einen schwenkbar mit dem Träger (24) gekoppelten Hebelarm (36), eine erste Verbindung (40), die an ihren Enden schwenkbar mit dem Hebelarm (36) bzw. mit dem einen Bremsbelag (18) gekoppelt ist, und eine zweite Verbindung (48), die an ihren Enden schwenkbar mit dem Hebelarm (36) bzw. mit dem äußeren Schenkel (16.2) des Sattels (16) gekoppelt ist, umfasst, wobei die Enden der ersten und zweiten Verbindungen (40, 48), die mit dem Hebelarm (36) gekoppelt sind, an entgegengesetzten Seiten der Drehverbindung des Hebelarms (36) mit dem Träger (24) angekoppelt sind.

5. Scheibenbremse nach Anspruch 4, wobei sich in der ersten Position des Sattels (16) die erste Verbindung (40) in einem Winkel relativ zu der Bremsscheibe (12) erstreckt, der senkrechter zu der Bremsscheibe (12) als der Winkel ist, in dem sich die zweite Verbindung (48) relativ zu der Bremsscheibe (12) erstreckt, und wobei sich in der versetzten Position des Sattels (16) die zweite Verbindung (48) in einem Winkel relativ zu der Bremsscheibe (12) erstreckt, der senkrechter zu der Bremsscheibe (12) als der Winkel ist, in dem sich die erste Verbindung (40) relativ zu der Bremsscheibe (12) erstreckt.

6. Scheibenbremse nach Anspruch 1 oder 2, welche Vorspannmittel (28) umfasst, durch die die Bremsbeläge in Richtung ihrer ersten Position getrieben werden.

7. Scheibenbremse nach Anspruch 6, wobei die Bremsbeläge (18, 20) umfangs relativ zu der Scheibe versetzbar sind, wobei der Sattel einen ersten Schenkel und einen zweiten Schenkel aufweist, wobei die Verbindungsanordnung mit einer Betätigungseinrichtung koppelbar ist, wobei die Verbindungsanordnung einen Hebelarm (36), der schwenkbar mit dem ersten Schenkel des Sattels (16) gekoppelt ist, und eine Verbindung (110), die schwenkbar mit dem Hebelarm (36) an einer von der Verbindung des Hebelarms (36) mit dem ersten Schenkel (108) des Sattels (16) beabstandeten Position und mit dem zweiten Schenkel des Sattels (16) gekoppelt ist, umfasst.

8. Scheibenbremse nach Anspruch 7, wobei sich, wenn sich die Bremsbeläge (18, 20) in ihrer ersten Position befinden, die Verbindung (110) in einem Winkel relativ zu der Bremsscheibe (12) erstreckt, der näher an einer Senkrechten angeordnet ist als der Winkel, in dem sie sich erstreckt, wenn sich die Bremsbeläge (18, 20) in ihrer zweiten Position befinden.

9. Scheibenbremse nach einem der vorhergehenden Ansprüche, welche eine Sperranordnung (120) zum Hemmen der Betätigung der Betätigungsmittel, wenn sich die Bremse in ihrem zweiten Betriebszustand befindet, umfasst.

10. Scheibenbremse nach Anspruch 9, wobei die Sperranordnung (120) einen Sperrklinkenmechanismus (122, 124) umfasst.

## Revendications

1. Frein à disque comprenant :
un étrier (16) ;
une paire de plaquettes (18, 20) espacée de manière transversale, montée sur l'étrier (16), les plaquettes (18, 20) définissant des surfaces de frottement opposées dirigées vers l'intérieur pour entrer en contact avec les côtés opposés d'un disque de frein (12) qui passe entre les plaquettes (18, 20) ; et
des moyens d'actionnement (22) pour déplacer les plaquettes de frein (18, 20) par rapport au disque de frein (12) entre une position libérée dans laquelle le disque de frein (12) peut passer librement entre elles, et une position actionnée dans laquelle les plaquettes (18, 20) sont déplacées en contact avec le disque (12) pour freiner le disque (12), le frein ayant une première condition opérationnelle dans laquelle les moyens d'actionnement peuvent déplacer les plaquettes (18, 20) dans la position actionnée pour freiner le disque de frein (12) et une seconde condition opérationnelle dans laquelle le freinage du disque de frein (12) est empêché, **caractérisé en ce que** les deux plaquettes de frein (18, 20) sont déplaçables dans la direction circonférentielle du disque de frein (12) entre une première position, correspondant à la première condition opérationnelle du frein (10), et une position déplacée correspondant à la seconde condition opérationnelle, les moyens d'actionnement (22) comprenant un agencement de liaison (34) configure de sorte que lorsque les plaquettes de frein sont déplacées de manière circonférentielle de la première position vers la position déplacée, l'espacement entre les plaquettes de frein (18, 20) est augmenté.

2. Frein à disque selon la revendication 1, dans lequel le frein est sollicité vers sa première condition opérationnelle, le frein étant déplacé vers sa première condition opérationnelle lorsque le disque de frein (12) est fixe ou se déplace dans une direction et le frein étant déplacé, contre la sollicitation, vers sa seconde condition opérationnelle lorsque le disque de frein (12) est déplacé dans la direction opposée.

3. Frein à disque selon la revendication 1 ou la revendication 2, qui comprend une console (24) sur laquelle l'étrier (16) est monté, au moins une partie de l'étrier (16) étant déplaçable par rapport à la console (24) généralement dans la direction circonférentielle du disque de frein (12) entre une première position correspondant à la première condition opérationnelle du frein et une position déplacée correspondant à la seconde condition opérationnelle du frein, et les moyens de sollicitation (28) agissant entre l'étrier (16) et la console (24) pour solliciter l'étrier (16) vers sa première position.

4. Frein à disque selon la revendication 3, dans lequel l'étrier (16) a une patte interne et une patte externe (16.2), l'une des plaquettes de frein (18) étant fixée à la patte interne et étant déplaçable par rapport à la patte externe (16,2) de l'étrier (16) dans une direction transversale par rapport au disque de frein, l'autre plaquette (20) étant fixée sur la patte externe (16.2) de l'étrier (16) qui est déplaçable par rapport à la console (24) de manière transversale par rapport au disque de frein (12) et dans lequel l'agencement de liaison (34) peut être raccordé à un actionneur, l'agencement de liaison (34) comprenant un bras de levier (36) raccordé de manière pivotante à la console (24), une première liaison (40) raccordée de manière pivotante au niveau de ses extrémités respectivement au bras de levier (36) et à ladite une plaquette de frein (18) et une seconde liaison (48) qui est raccordée de manière pivotante au niveau de ses extrémités par rapport au bras de levier (36) et à la patte externe (16.2) de l'étrier (16), les extrémités des première et seconde liaisons (40, 48) raccordées au bras de levier (36) étant raccordées aux côtés opposés du raccordement pivotant du bras de levier (36) à la console (24).

5. Frein à disque selon la revendication 4, dans lequel, dans la première position de l'étrier (16), la première liaison (40) s'étend selon un angle par rapport au disque de frein (12) qui est plus habituel par rapport au disque de frein (12) que l'angle selon lequel la seconde liaison (48) s'étend par rapport au disque de frein (12) et dans la position déplacée de l'étrier (16), la seconde liaison (48) s'étend au niveau d'un angle par rapport au disque de frein (12) qui est plus habituel par rapport au disque de frein (12) que l'angle selon lequel la première liaison (40) s'étend par rapport au disque de frein (12).

6. Frein à disque selon la revendication 1 ou la revendication 2, qui comprend des moyens de sollicitation (28), moyennant quoi les plaquettes de frein sont poussées vers la première position.

7. Frein à disque selon la revendication 6, dans lequel les plaquettes de frein (18, 20) sont déplaçables de manière circonférentielle par rapport au disque, l'étrier ayant une première patte et une seconde patte, l'agencement de liaison pouvant être raccordé à un actionneur, l'agencement de liaison comprenant un bras de levier (36) qui est raccordé de manière pivotante à la première patte de l'étrier (16) et une liaison (110) qui est raccordée de manière pivotante au bras de levier (36) au niveau d'une position espacée du raccordement du bras de levier (36) jusqu'à la première patte (108) de l'étrier (16), et jusqu'à la seconde patte de l'étrier (16).

8. Frein à disque selon la revendication 7, dans lequel, lorsque les plaquettes de frein (18, 20) sont dans leur première position, la liaison (110) s'étend selon un angle par rapport au disque de frein (12) plus proche de la normale que l'angle selon lequel elle s'étend lorsque les plaquettes de frein (18, 20) sont dans leur seconde position.

9. Frein à disque selon l'une quelconque des revendications précédentes, qui comprend un agencement de butée (120) pour empêcher le fonctionnement des moyens d'actionnement lorsque le frein est dans sa seconde condition opérationnelle.

10. Frein à disque selon la revendication 9, dans lequel l'agencement de butée (120) comprend un mécanisme de cliquet (122, 124).
